# EUROPEAN PATENT APPLICATION

(11) **EP 1 091 612 A1**
(43) Date of publication of application: **11.04.2001**
(21) Application number: 99402431.3
(22) Date of filing: 04.10.1999
(51) Int. Cl.: H04Q 7/38

(54) **Method to reduce handovers in mobile radio systems**

(71) Applicant: MOTOROLA, INC., Schaumburg, IL 60196 (US)
(72) Inventor: Moorut, Ravindra Prakash, 94230 Cachan (FR); Goeusse, François, 91460 Marcoussis (FR); Benamar, Abdelkrim, 77500 Chelles (FR)
(74) Representative: Kopacz, William James

(57) **Abstract**

A method for performing handover of a mobile station (36) from one mobile exchange cell (30) to another mobile exchange cell (32, 34) in a mobile telecommunications system comprising a plurality of mobile exchange cells. The method comprises selecting potential candidate cells (20) to receive the handover, and evaluating the trend of variation of the signal from each of the candidate cells (22). If one or more cells has a positive trend (24), one of said cells with a positive trend is selected (26 or 28). If there are no cells with a positive trend, a cell is selected on the basis of signal quality. Potential cells are selected on the basis of downlink threshold or uplink threshold.

## Description

### FIELD OF THE INVENTION

This invention relates to radio communications systems, and more particularly to handovers in mobile radio communications systems.

### BACKGROUND OF THE INVENTION

Cellular radio communication systems are well known. Such systems are, typically, comprised of a number of cells, each having a service coverage area, and a number of cellular telephones (communications units, also sometimes referred to as mobile stations or MSs). The service coverage areas of adjacent cells are typically arranged to partially overlap in such a manner as to provide a substantially continuous coverage area in which a communications unit receiving service from one cell may be handed off to an adjacent cell with no interruption in service. The GSM pan-European digital cellular system, as specified in GSM recommendations available from the European Telecommunications Standards Institute (ETSI) is an example of such a system.

The GSM system is a TDM/TDMA system providing eight full duplex signal paths (eight TDM slots per TDM frame) on each radio channel. A single, primary radio channel assigned to a base transceiver station (BTS) located at a base site within a cell, by virtue of its being time multiplexed, can support up to seven full rate duplex traffic users (speech or data) in addition to a multiplexed common control channel within the eight TDM slots.

Exchanges of paging and setup control information within GSM between MSs and BTSs typically occur on the common control channel (CCCH) which occupies at least one slot of a primary channel of the BTS. Transmitted by the BTS on the CCCH are distinctive identification signals as well as synchronization and timing information common to all other frequencies and slots of the BTS. CCCH information allows an MS to differentiate between between primary and non-primary channels.

Upon activation, an MS scans a pre-programmed spectrum in search of CCCH identification signals transmitted from nearby BTSs. Upon detecting a CCCH identification signal, the communications unit measures the signal quality factor (such as signal strength) of the identification signal. Upon completing the scan of frequencies within the spectrum, the MS generally selects the BTS providing the largest relative signal quality factor as a serving BTS. Upon identifying and locking on to a suitably strong signal, the communication unit monitors the selected CCCH for incoming calls. While monitoring the serving BTS, the MS receives an adjacent base site frequency list on the CCCH of the serving BTS. The list comprises the likely candidates to become serving BTS in the event a handover is required. The set of frequencies identifies the spectral location of primary channels of BTSs adjacent the serving BTS. Limitation of the set of frequencies to BTSs adjacent the serving BTS reduces the time period required to measure, and transfer to a serving BTS the signal strength values of the BTSs that are presumably the best handover candidates. Limitation of the set of frequencies to adjacent BTSs also reduces the possibility of a handover to a distant BTS with a high signal strength value caused by signal propagation anomalies.

During normal operation (including during active calls), the MS monitors for, identifies, and measures a received signal strength indication (RSSI) of primary channels of nearby BTSs. The MS detects and measures the RSSI of nearby BTSs by reference to the frequency lists communicated to the MS by the serving BTS. Upon detection of a signal of a nearby BTS, the MS also decodes an ID of the nearby BTS.

If involved in an active call, the MS relays measurement information back to the base site on an associated signal channel. Through such a process, it is possible for the MS to maintain an association with the most appropriate BTS. The process may entail an autonomous switching by the MS to a different BTS, causing perhaps a re-registration by the MS with the system indicating that a switch has occurred. Alternatively, during an active communication exchange, the MS may be commanded by the system to hand over to a more appropriate BTS. Handover based upon information provided to the BTS by the MS is commonly referred to as a mobile assisted handover (MAHO).

Under GSM, a decision to handoff a communication unit to a target BTS may be based upon a power budget expression (see GSM recommendation 5.08). The power budget expression provides a method of comparing a path loss between an MS and a serving cell with a path loss between the MS and the potential handoff target cell. Under GSM, handover may also be desirable when the MS exceeds a specified distance from a serving BTS. Handover may be desirable in such case to minimize effective cell size and to insure that an MS is served from the nearest BTS. Other handover causes, as specified in GSM recommendation 5.08, include handover for reason high bit-error-rate threshold (RXQUAL), and handover for reason of downlink threshold or uplink threshold (RXLEV).

The GSM specifications do not prescribe a special handover algorithm, but show how the variables measured in the system can be used to determine when a handover shall happen.

If the necessity for a handoff is recognized by the BTS, it sends a "handover required message" to the responsible mobile service switching center (MSC). The message contains the reason (RXQUAL, RXLEV, DISTANCE, POWER BUDGET) why the handover is requested and the list of target cells.

This list is compiled using the following expressions:
1. RXLEV-NCELL(n)>RXLEV-MIN(n) + Max (0,Pa) where:
   RXLEV-NCELL(n) is the RXLEV assessed on BCCH carrier as indicated in the BCCH allocation
   RXLEV-Min(n) is the minimum RXLEV required for an MS to be allowed to handover to cell "n"
   MS-TXPWR-MAX(n) is the maximum RF TX power an MS is permitted to use on a traffic channel in the serving cell
   P is the maximum TX power capability of the MS
   Pa=MS-TXPWR-MAX(n) - P
2. PBGT(n) - HO-MARGIN(n) where:
   PBGT(n) is the difference between the path loss between the MS and the serving cell with the path loss between the MS and a potential handover target n.
   HO-MARGIN(n) is the minimum difference required for the received signal level to allow a handover to cell n

The power budget criterion insures that the MS is always assigned to the cell with the lowest path loss.

For the cells where the first condition is met, the second expression is evaluated. The list contains the results in decreasing order, i.e., in the first position is the cell for which the value of expression 2 is the highest and so on.

While the prior art handover algorithm works well it is not optimized to minimize the number of handovers over a given path.

Using the above algorithm, among the cells with appropriate RXLEV the one with the lowest path loss is chosen. The problem with this algorithm is that an MS may do a handover to a cell with the lowest path loss but whose signal is decreasing, meaning that soon afterward the MS will have to handover once again to another cell because the RXLEV criterion is not verified. The number of handovers will be reduced when a handover is made to a cell with an increasing signal as the RXLEV will tend to remain above the required threshold.

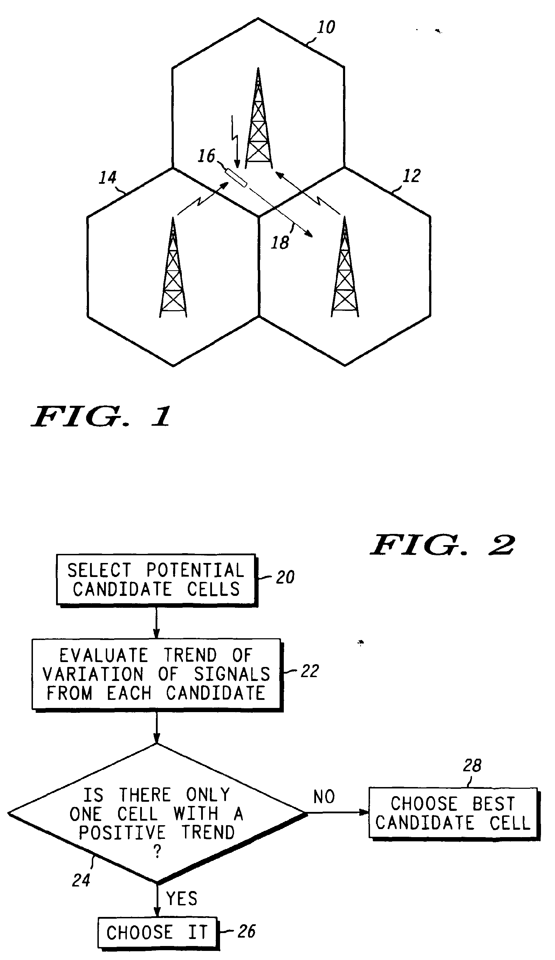

FIG. 1 illustrates a case where the number of unnecessary handovers may not be minimized by use of the above algorithm. FIG. 1 shows three cells of a cellular system including a current cell 10, and adjacent cell 12, and another adjacent cell 14. A mobile station 16 is shown within current cell 10 and moving in a direction as shown by arrow 18.

It is assumed that both cell 12 and 14 have received signal strength higher than the required threshold. Hence, they are both potential handover candidates. However, because of the power budget criterion, a handover could be made first to cell 14. But as the MS 16 is moving away from cell 14, the received signal strength from this cell will decrease and may eventually fall below the threshold, requiring a subsequent handover to cell 12. So a handover will have been made to cell 14 and then later to cell 12. The number of handovers could have been reduced if a handover were made directly to cell 12 toward which the MS 16 was moving.

### SUMMARY OF THE INVENTION

In a first embodiment of the invention a method for performing handover of a mobile station from one mobile exchange cell to another mobile exchange cell in a mobile telecommunications system is provided. The mobile telecommunications system includes a plurality of mobile exchange cells providing communications to a plurality of mobile stations. The method comprises selecting potential candidate cells to receive the handover, and evaluating the trend of variation of the signal from each of the candidate cells. If one or more cells has a positive trend, one of said cells with a positive trend is selected. If there are no cells with a positive trend, a cell is selected on the basis of signal quality. Potential cells are selected on the basis of downlink threshold or uplink threshold.
In a second embodiment of the invention a mobile telecommunications system is provided.

A preferred embodiment of the invention will now be described, by way of example only, with reference to the drawings.

### BRIEF DESCRIPTION OF THE DRAWINGS

FIG.1 is a diagram of three adjacent cells in a cellular telephone system.

FIG. 2 is a flowchart describing the handover algorithm of the instant invention.

FIG. 3 is another diagram of three adjacent cells of a cellular telephone system.

### DESCRIPTION OF THE PREFERRED EMBODIMENT

The purpose of the instant invention is to reduce the number of unnecessary handovers so that a handover occurs directly to the adjacent cell toward which the mobile station is moving. Once the necessity for a handover is recognized, the selection of the candidate cell could be done in such a way that a handover is made to a cell with an increasing signal. The number of handovers per covered distance which are made by a cellular system is an important indicator of the performance of the handover algorithm. Reducing the number of handovers has several important advantages: it minimizes the amount of signalling traffic; it offers better signal quality to the user because every time there is a hard handover, there is break in communications; and it reduces the probability of having dropped calls, as every time a hard handover occurs, there can be a dropped call.

In the instant invention, an algorithm has been developed for selecting a candidate handover cell which will reduce the number of unnecessary handovers and thus increase the efficiency of the cellular system.

The algorithm is based on the "trend" of variation of the received signal strengths rather than an absolute value of received signal strength and path loss at a given instant. The algorithm of the instant invention is shown in Fig. 2.

In Fig. 2, the potential candidate cells for a handover are selected in block 20. In the case of a GSM system the conventional GSM handover candidate algorithm as discussed previously (Expression No. 1) would be used. In block 22, however, the trend of variations of the signals from each of the candidate cells is evaluated. This evaluation will be discussed later. In decision block 24, if there is only one cell with a positive trend then that cell is chosen as shown in block 26. If, however, there is either no adjacent cell with a positive trend or there are more than one adjacent candidate cells with a positive trend an evaluation is made in block 28 based on the power budget criterion of the GSM algorithm as previously discussed (Expression No. 2).

Trend evaluation as required in block 22 is a measure of whether a signal is increasing or decreasing. A positive trend would indicate an increasing signal and a negative trend a decreasing signal. The trend of variation of the signal is determined in a preferred embodiment by using the derivative of the signal with time. A positive derivative would indicate a positive trend, and a negative derivative would indicate a negative trend. Alternatively, the correlation between received signal strengths can be used to determine the trend of variation of a signal with respect to another. A positive correlation between two received signal strengths means that the two signal strengths are varying in the same manner, i.e., either both are increasing or both are decreasing. A negative correlation means that the receive signal strengths are varying in opposite manners. To determine the trend by means of correlation, the trend of variation of at least one of the received signals must be known or calculated, preferrably using the derivative method previously discussed. For example, the trend of variation of the current cell can be obtained by deriving the received signal from the current cell. The correlations between the received signal from the current cell and from each of the adjacent cells are then calculated.

If the current cell has a positive trend and there is a positive correlation between received signals from the current cell and an adjacent cell, then the considered adjacent cell has a positive trend. If there is a negative correlation between the received signals from the current cell and an adjacent cell, then the considered cell has a negative trend.

Likewise, if the current cell has a negative trend and there is a positive correlation between received signals from the current cell and an adjacent cell, then the considered adjacent cell has a negative trend. If there is a negative correlation between the received signals from the current cell and an adjacent cell, then the considered cell has a positive trend.

In these cases a positive trend indicates that the received signal from the considered adjacent cell is increasing and a negative trend indicates that the received signal from the considered adjacent cell is decreasing.

The results of the use of the new algorithm will be shown with respect to several cases. The first criterion of Fig. 2 will produce a list of cells with a sufficient RXLEV. Among this initial list of candidates, the MS will choose the ones with positive trends. The positive trend will insure that the MS is choosing a cell with a signal which is increasing and in many cases, choosing a cell with positive trend reduces the number of handovers.

Referring again to Fig. 1, the three adjacent cells 10, 12, 14 are shown with mobile station MS 16 moving through the current cell toward adjacent cell 12. Recall that based on the previous handover algorithm the MS 16 could have made a handover to cell 14 first and then soon after to cell 12. It would have been more beneficial to do a handover to cell 12 directly as the signal from cell 14 is decreasing and that from cell 12 is increasing. This results in two handovers instead of the optimal single handover.

Based on the new algorithm, however, an initial list of target candidates will be selected first based on RXLEV criterion. Then, out of this initial list, the trend of variation of the various RXLEV _NCELL(n) from the candidates is calculated. Cell 14 would likely have a negative trend as the MS 16 is moving generally away from it. It is assumed that among the other adjacent cells, only the signal from adjacent cell 12 has a positive trend. Following the new algorithm of Fig. 2, the MS 16 will do a handover to cell 12 directly and not to cell 14.

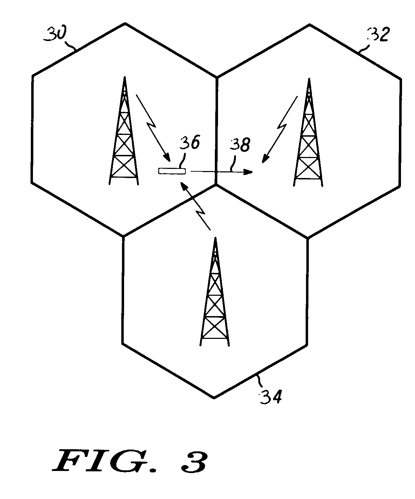

Fig. 3 again shows three adjacent cells of a cellular telephone system, in this case cell 30 is the current cell and cells 32 and 34 are adjacent cells. The MS 36 is moving within the current cell 30 generally in the direction indicated by arrow 38.

Again, an initial list of target candidates will be selected first based on RXLEV criteria. In this case, however, assume the signals from both cells 32 and 34 have a positive trend. Following the algorithm of Fig. 2, if there is more than one adjacent candidate cell with a positive trend, the power budget factors PBGT(n)-HO_MARGIN(n) for each of the two cells 32 and 34 will be calculated. The one with the highest value will be the final chosen handover cell. Hence, among the cells with appropriate RXLEV and a positive trend, the cell with the lowest path loss will finally be chosen.

In the final case where none of the adjacent cells has a positive trend, following the algorithm set forth in Fig. 2 again, the PBGT(n)-HO_MARGIN(n) for each of the candidate cells is determined and a handover will be made to the cell with the highest PBGT(n)-HO_MARGIN(n). This case is quite unlikely to occur if the network is well planned.

The method of the instant invention provides a handover algorithm designed to reduce the number of handovers per covered distance. Reducing the number of handovers improves network efficiency, offers better signal quality, and reduces the possibility of dropped calls.

## Claims

1. A method for performing handover of a mobile station (36) from one mobile exchange cell (30) to another mobile exchange cell (32, 34) in a mobile telecommunications system comprising a plurality of mobile exchange cells, the method comprising the steps of:
identifying potential candidate cells (20) to receive the handover, the method characterised by the steps of:
evaluating the trend of variation of at least one received signal from each of the candidate cells (22), and if one or more cells has a positive trend,
selecting one of said cells with a positive trend (26, 28).

2. A method as set forth in claim 1 in which potential cells are identified on the basis of a downlink signal level threshold or an uplink signal level threshold.

3. A method as set forth in claims 1 or 2, wherein if there are no cells with a positive trend, selecting a cell on the basis of signal quality measure.

4. A method as set forth in any one of the preceding claims in which, if there is only one cell with a positive trend, that cell is selected (26).

5. A method as set forth in any one of claims 1 to 3, wherein if there are no cells of the candidate cells with a positive trend, selecting (28) a cell on the basis of quality measure of each of the received signals from the candidate cells.

6. A method as set forth in any one of claims 1 to 3, wherein if there is more than one cell with a positive trend, the cell is selected (28) from the list of cells having a positive trend on the basis of signal quality measure of such cells.

7. A mobile telecommunications system comprising a plurality of mobile exchange cells providing communications for a plurality of mobile communication stations, wherein the mobile telecommunications system has means for identifying potential candidate cells to receive a handover of a mobile station (36) from one mobile exchange cell (30) to another mobile exchange cell (32, 34),
the mobile communciations system characterised by:
means for evaluating the trend of variation of at least one received signal from each of the candidate cells, and if one or more cells has a positive trend, means for selecting one of said cells with a positive trend to receive the handover.
